(19) Europäisches Patentamt
European Patent Office
Office européen des brevets

(11) EP 2 003 771 B1

(12) EUROPEAN PATENT SPECIFICATION

(45) Date of publication and mention
of the grant of the patent:
**17.10.2012 Bulletin 2012/42**

(51) Int Cl.:
*H02P 6/16* *(2006.01)*     *H02P 8/08* *(2006.01)*
*H02P 23/14* *(2006.01)*     *G01R 31/34* *(2006.01)*

(21) Application number: **07405168.1**

(22) Date of filing: **11.06.2007**

(54) **Closed loop sensorless control of permanent magnet synchronous motors**

Sensorlose Regelung eines synchronen Permanentmagnetmotors in einem geschlossenen Regelkreis

Commande sans capteur de boucle fermée de moteurs synchronisés et magnétiques en permanence

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**17.12.2008 Bulletin 2008/51**

(73) Proprietor: **Société Industrielle de Sonceboz S.A.
2605 Sonceboz (CH)**

(72) Inventors:
• **Persson, Jan
2532 Macolin (CH)**
• **Gerber, Georges
2720 Tramelan (CH)**

(74) Representative: **Reuteler, Raymond Werner
Reuteler & Cie SA
Chemin de la Vuarpillière 29
1260 Nyon (CH)**

(56) References cited:
**WO-A-2007/062612     US-A- 5 521 482**

**Description**

The present invention relates to a closed loop control system for a permanent magnet synchronous motor (PMSM), such as a stepper or BLDC (brushless DC) motor.

Permanent magnet synchronous motors can be controlled in either an open loop or closed loop manner. The advantage of using a closed loop is that the controller adapts the motor phase current automatically to the external load, while open loop operation needs a current large enough to overcome any changes in the external load, and is thus less efficient. To provide the feedback to close the loop, certain motors are provided with external position or load torque sensors. External sensors however increase cost and size of motors, while reducing reliability.

It is also known to control motors in a so-called "sensorless" or "self sensing" manner, i.e. without use of an external position or torque sensor, by measuring phase currents of the motor and estimating therefrom position or torque information.

Some sensorless motor control methods rely on the estimation of induced voltage (back-EMF), which is proportional to the rotor speed. A drawback of conventional methods based on back-EMF is their imprecision or inability to function at very low speed operation, because when the rotor speed approaches zero, the back-EMF also disappears. Consequently the signal-to-noise ratio at low speeds becomes very small and the position/torque information becomes inaccurate. Certain sensorless motor control systems overcome this by monitoring position dependant variations in the phase inductance, for example as discussed in references [4], [7] (see end of the present description) but these methods cannot be used, inter alia, in stepper motors since the position dependant inductance variation is very small. Various sensorless motor control methods have been proposed to address the problem of operation at low speed, as discussed for example in references [1] to [6] (listed at the end of the detailed description part of the present specification).

A drawback of certain proposed methods is the need for complex calculation of parameters that may affect responsiveness or stability / robustness of the control loop, the method proposed in [1] is a typical example. Another drawback of certain proposed methods (see for example references [2], [3], [5], [6]), is a reliance on predetermined characteristics of the motor, such as phase resistance and inductance, that may vary as a function of environmental and operating conditions, in particular temperature, speed and load, in a manner difficult to accurately predict when considering material property and manufacturing tolerances.

Certain applications require high positional accuracy and stability at low speed, for example actuators for commanding valves or other mechanical or hydraulic control devices. Manufacturing and assembly tolerances, as well as tolerances needed to allow relative movement between parts, create play in systems coupling the motor rotor to the actuated organ. Even if the actuator is accurately controlled, play in the coupling system leads to imprecision in the position of the actuated organ, especially where the actuator effects a change of direction i.e. drives in both directions. Play creates a "dead-zone" between forward and reverse actuation, where the position of the actuated organ relative to the position of the rotor of the actuator motor is undetermined. Error in positioning of the actuated organ is thus proportional to the magnitude of play in the coupling system.

An object of this invention is to provide a permanent magnet synchronous motor control system that is reliable, stable, accurate and robust, in particular at low speed operation.

It is advantageous to provide a control system that is easily configurable for different permanent magnet synchronous motors.

It is advantageous to provide a control system that is accurate despite material property and manufacturing tolerances of the motors

Another object of this invention is to provide an actuation system with a permanent magnet synchronous motor that is able to accurately command an organ to be actuated, taking into account any play between the rotor of the motor and the organ.

Objects of this invention have been achieved by providing a method of controlling a permanent magnet synchronous motor according to claim 1, and by providing a PMSM control system according to claim 10.

Disclosed herein is a method of controlling a multiphase PMSM, comprising measuring phase current $i(t)$ and phase voltage $u(t)$ of at least one phase of the PMSM, calculating a phase angle $\varphi$ between the measured phase current $i(t)$ and phase voltage $u(t)$, and estimating external load torque $r$ as a factor of the cosine of the phase angle $\varphi$, wherein the estimated external load torque $\tau$ is compared to reference load torque $T_{ref}$, and based on the difference, the phase current $i(t)$ is adjusted to compensate for an increase or decrease in external load torque.

The estimated external load torque $r$ may be used to determine a reference position of the rotor relative to one or more external mechanical limits generating a sharp change in the external load. In an advantageous embodiment, the estimated external load torque $\tau$ may be used to determine the position limits of the dead-zone of an actuation system and therefrom define a reference position of the rotor relative to the actuated organ accounting for the dead-zone range.

The estimated external load torque $\tau$ may be used to control the phase current $i(t)$ in a feedback loop. In an advantageous embodiment, the estimated external load torque $\tau$ is used to control the phase current $i(t)$ in a feedback loop based on a comparison of the external load torque $\tau$ with a reference load torque $T_{ref}$ corresponding to the electromechanical force supplied by the motor.

The phase current and voltage may advantageously be integrated over a specified time that is greater than or equal to a half period of the alternating current supply. Integration reduces the influence of noise and improves accuracy of estimation of the phase angle at low speeds. In order to increase the resolution of the control signal, successive integrations may be calculated in parallel, each new integration starting at a defined fraction of the period T after the previous integration. For example, every 30° of a period, a new integration calculation may be commenced, so that the frequency of the control signal output is greater than the frequency of the current supply.

An important advantage of the method according to this invention is that the estimation of the back-EMF phase angle $\gamma$ is independent of characteristics of the motor (such as the inductance and resistance) and can therefore be easily implemented in different motors with reduced adjustment and calibration compared to existing control systems, and moreover provides accurate control of motors of the same series but with slight differences due to manufacturing and material property tolerances. The method according to this invention is particularly robust and reliable at very low speeds and can thus advantageously be used in actuation systems for accurate positioning of the actuated organ.

Adjustment of the rotor position to a reference position taking into account the dead zone due to play in an actuation system, is a particularly advantageous feature of the method and system according to this invention. At start-up, the motor rotor is turned in one direction while the external load torque is continuously estimated according to the method described above and the displacement of the motor is simultaneously measured, until a rapid change in the torque value is detected. The direction of rotation of the rotor is then reversed while continuously estimating the external load torque until a rapid change in external load torque is detected. At positions of rapid change in external load torque, displacement positions of the rotor are registered. A reference position of the rotor is determined between the registered positions that define limit positions of the dead zone. The reference position thus serves as the starting position of the rotor from which the rotor displacement is measured for command of the actuated organ of the actuation system. Positional errors of the actuator organ due to uncertainties in the rotor position arising from the dead zone are thus eliminated.

An actuation system according to this invention comprises a multi-phase permanent magnet synchronous motor comprising an electrical current sensor or sensors on at least one of the phases for measuring the time varying current of a stator coil of the phase, a micro-processor connected to the current sensor(s) the micro-processor being configured to estimate the phase angle between the measured phase current and phase voltage and therefrom estimate external load torque as a factor of the cosine of the phase angle to generate a current control signal value, the micro-processor also connected to a power converter supplying the power to the motor based on the current control signal value of the micro-processor.

Further objects and advantageous features of the invention will be apparent from the claims and from the following detailed description of embodiments of this invention and accompanying drawings in which:

Figures 1a to 1c are graphs illustrating the time variance of phase current, induced voltage (back-EMF) and electromechanical power for various values of cos $\gamma$ representing different external load torques, whereby figure 1a represents a small load torque (cos $\gamma$ is $\approx 0$), figure 1b represents a medium load torque (cos $\gamma$ is $\approx 0.3$) and figure 1c represents operation of a large external load torque (cos $\gamma$ is $\approx 0.8$);

Figure 2a represents a vector diagram for medium to high speed operation of a stepper motor in which the values of phase voltage u(t), phase current i(t), phase angle $\varphi$ and induced voltage (back-EMF) e are represented;

Figure 2b illustrates a vector diagram for low speed operation of a stepper motor in which the values of phase voltage u(t), phase current i(t), phase angler $\varphi$ and induced voltage (back-EMF) e are represented according to the method proposed in this invention;

Figure 3 is a block diagram illustrating the architecture of a PMSM with a sensorless controller according to this invention;

Figure 4 is a block diagram illustrating functional relationships of a sensorless controller for dead zone compensation and external load torque compensation according to this invention;

Figure 5a is a graph illustrating the relationships of external load torque as a function of displacement over the dead zone range;

Figure 5b is a flow chart illustrating a method for dead zone compensation;

Figure 6 is a flow chart illustrating load torque compensation procedure according to this invention;

Let us first consider how the torque is produced in a PMSM motor, the example given below being for a stepper motor but the theory can be extended to any multiphase motor, such as a multiphase BLDC motor. Hereafter is a definition of symbols and terms referred to :

| | | |
|---|---|---|
| $e$ | Induced voltage/Back EMF | [V] |
| $E$ | Induced voltage/Back EMF (RMS value) | [V] |
| $i$ | Phase currents | [A] |
| $I$ | Phase currents (RMS value) | [A] |
| $u$ | Phase voltages | [V] |
| $U$ | Phase voltage (RMS value) | [V] |
| $T_{em}$ | Electromagnetic torque | [Nm] |
| $p_{em}$ | Electromagnetic power | [W] |
| $P_{em}$ | Electromagnetic power (RMS value) | [W] |
| $p$ | Power supplied by driver | [W] |
| $P$ | Power supplied by driver (RMS value) | [W] |
| $R$ | Phase resistance | [Ohm] |
| $L$ | Phase inductance | [H] |
| $\omega$ | Rotor speed | [rad/s] |
| $\tau$ | Utility/External load torque | [Nm] |
| $\gamma$ | Phase angle between $i$ and $e$ | [rad] |
| $\varphi$ | Phase angle between $i$ and $u$ | [rad] |

At first assume that all the produced torque is used by the external load i.e. any friction and losses are neglected.

$$\tau \approx T_{em} = P_{em} / \omega \qquad (1)$$

The electromagnetic power produced by a stepper motor can be described by

$$P_{em} = E \cdot I \cdot \cos \gamma \qquad (2)$$

From which we can develop

$$\tau \approx \frac{E \cdot I \cdot \cos \gamma}{\omega} \qquad (3)$$

Assume furthermore that the motor is running at essentially constant speed (which means that E is also constant) and that a constant current is imposed. It is then given that the external load torque is proportional to cos $\gamma$.

$$\tau \propto \cos \gamma \qquad (4)$$

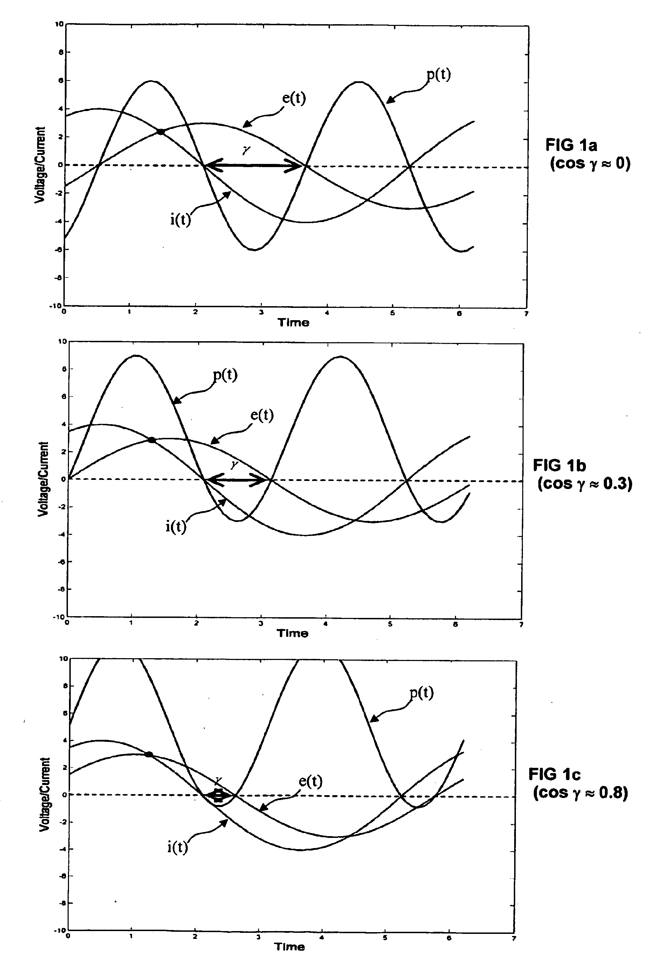

Referring to Fig 1a to Fig 1c the above reasoning will be explained. In Fig. 1a the motor is running at constant speed with a constant phase current of 4 [A], the external load in this case is very small so cos $\gamma \approx 0$. In Fig. 1b the external load torque has increased and it can be seen that the phase angle between i and $e$ has diminished with the result that cos $\gamma \approx 0.3$. In Fig. 1c the external load has increased further and cos $\gamma \approx 0.8$ which is close to the maximum value 1. If cos $\gamma = 1.0$ the motor will lose one step which therefore corresponds to the limit where the external torque becomes larger than the torque that can be produced by the stepper motor.

An external load torque can be estimated and controlled by indirect measurements of the phase angle $\gamma$ between the phase current i and the induced voltage e. The described method has several advantages over traditional methods, one being the simplicity, but the most important is the possibility to use the method also at very low speeds, for instance stepper motor speed inferior to 50 steps per second or 15 revolutions per minute (15 rpm).

From the reasoning above one can assume that the external load torque is proportional to cos $\gamma$.

The quantity cos $\gamma$ is impossible to measure directly without access to the flux quantities inside the motor. However, cos $\gamma$ can be estimated at low speed operation as described below, which is the operation mode which is the most interesting. The starting point is the classical electrical equation for one phase of the stepper motor.

$$u = R \cdot i + L \cdot \frac{di}{dt} + e \qquad (5)$$

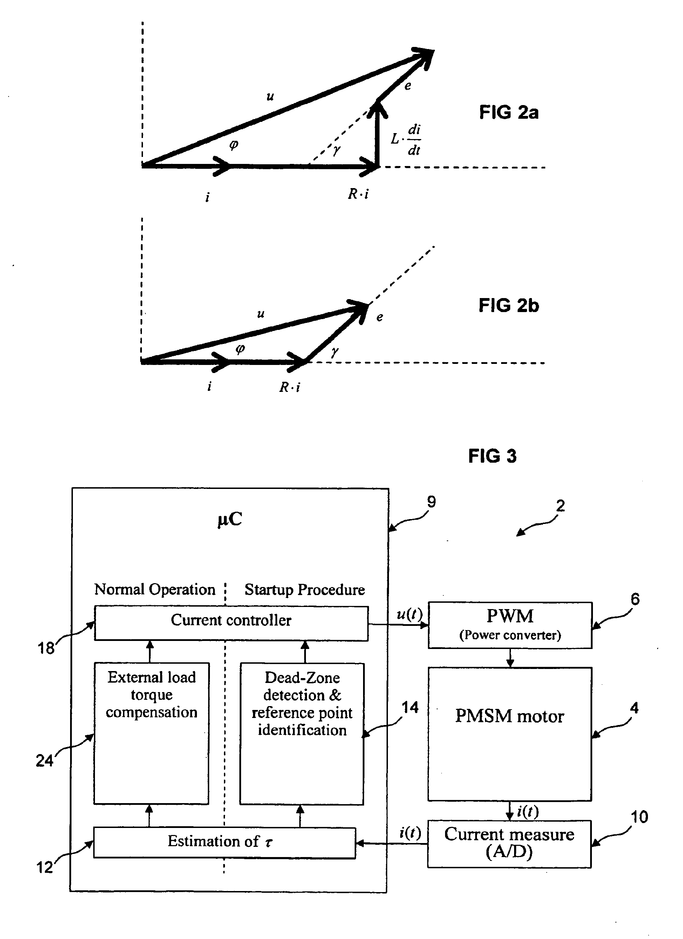

This equation can be represented in a vector diagram according to Fig. 2a.

In Fig. 2a it can be seen that the induced voltage phase angle $\gamma$ is difficult to estimate since it is preferable not to use characteristics of the motor, such as phase resistance R, and inductance L, which are subject to variations. There is however one condition which can significantly simplify the estimation of cos $\gamma$. If the speed is small enough the phase current i will have a time variation which is very slow and one can thus assume that

$$L \cdot \frac{di}{dt} \approx 0 \qquad (6)$$

which leads to a simplified vector diagram as shown in Fig. 2b.

From Fig. 2b we can deduce the desired variable cos $\gamma$ as

$$\cos \gamma = \frac{u^2 - e^2 - (Ri)^2}{2eRi} \qquad (7)$$

where

$$e = \sqrt{u^2 + (Ri)^2 - 2uRi \cos \varphi} \qquad (8)$$

A better alternative to his rather complex equation would be to make a rough assumption that

$$k_1 \cos \gamma \approx \cos \varphi \qquad (9)$$

where $k_1$ is a constant, since it is given by the low speed that e is small, whereby the trend of gamma will correspond to the trend of phi. Since one does not need to know the absolute value of the external torque (i.e. one does not need an absolute value of $\tau$ ) the relative trend in external torque increase or decrease is sufficient to control the motor. The relative value cos $\gamma$ can thus be obtained from a measurement of cos $\varphi$, and this is a rather simple task since i and $u$ are known variables. The preferable method to measure cos $\varphi$ is by using the following formulas.

$$P = UI \cos \varphi \qquad (10)$$

$$P = \frac{1}{T}\int_{o}^{T} u(t)i(t)dt \qquad \text{where T is preferably one electrical period (11)}$$

$$U = \sqrt{\frac{1}{T}\int_{o}^{T} u^2(t)dt} \qquad (12)$$

$$I = \sqrt{\frac{1}{T}\int_{o}^{T} i^2(t)dt} \qquad (13)$$

$$\cos\varphi = \frac{P}{UI} \qquad (14)$$

$$\tau = k_2\cos\varphi \qquad \text{where } k_2 \text{ is a constant} \qquad (15)$$

The integration advantageously eliminates any measurement noise, and the slower the motor rotates the longer the integration will be which makes the method very robust at low speed.

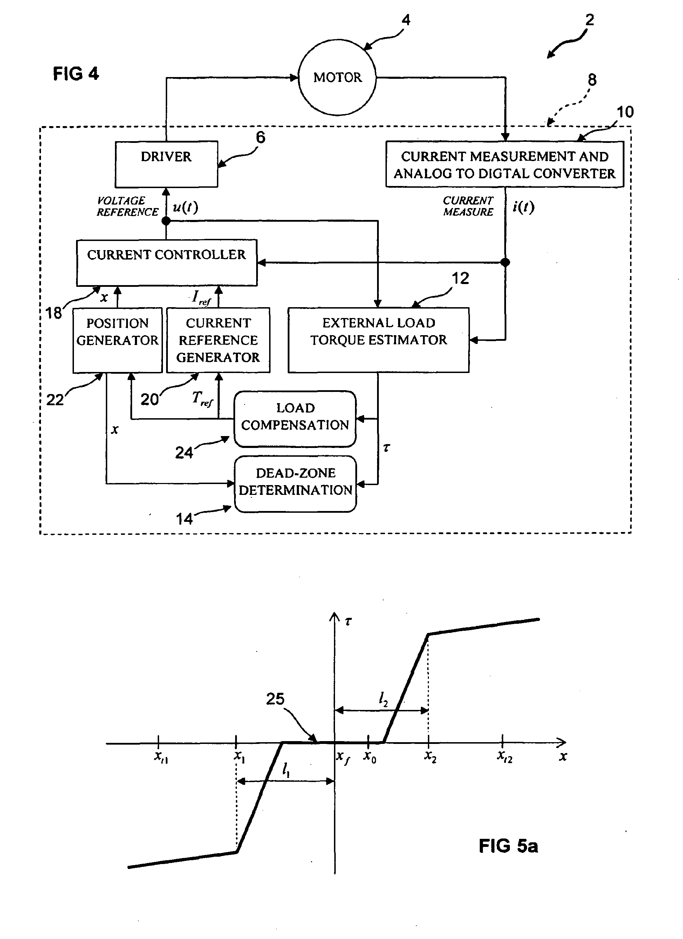

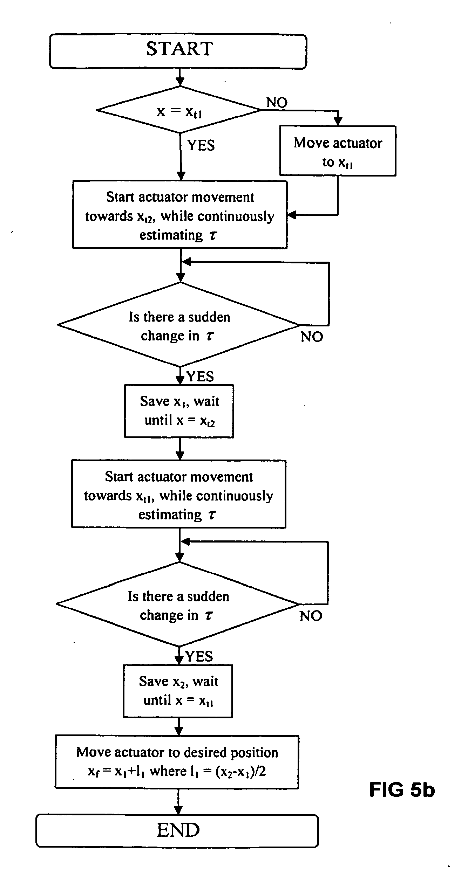

The external load torque estimation can be used for several purposes. One of these is to determine a reference position of the rotor relative to one or more external mechanical limits generating a sharp change in the external load since any changes in the external load can be tracked, as discussed herebelow with reference to figures 4, 5a, 5b.

In a particular embodiment, the estimated external load torque $\tau$ may be used to determine play between the rotor of an actuation system and a mechanical organ to be actuated, also referred to herein as the "dead-zone", and to set a reference position of the rotor thus eliminating errors in positioning of the organ due to play.

Referring first to figures 4 and 5a, 5b, a motor with sensorless controller 2 comprises a permanent magnet synchronous motor (PMSM) 4 such as a stepper motor or a brushless DC motor (BLDC) with multiple phases, each phase comprising one or more stator coils (not shown) for generating a varying magnetic field acting on the rotor of the motor. The stator coil or coils of each phase are supplied with electrical power by a driver or power converter 6 that is controlled by a control system 8. The control system 8 inputs a command signal u(t) to the driver 6 setting the voltage varying as a function of time, supplied to the stator coils of each phase of the motor. The motor system further comprises one or more current sensors (not shown) configured to measure the time varying current flowing through the stator coil of at least one phase of the motor. It is possible to use one phase current measurement, although one current measurement in each phase could also be implemented for increased reliability and/or accuracy. The current may be measured using various known techniques, for example by means of a shunt resistor mounted between a MOSFET Power Switching Device and Power GND, or by means of a current transducer mounted on a conductor of the phase. The voltage value need not be measured by means of a sensor, since the value corresponds to the output signal u(t) of the current controller 18.

Referring to figure 3, the measured current is converted to a digital signal representing the current amplitude as a function of time via an A/D (analogue to digital) converter 10. The digital signal is input into a micro-processor 9 that comprises a module 12 for calculating an estimation of the external load torque by calculating cos $\varphi$ in accordance with equation (14) and (15) hereinabove.

The external load torque $\tau$ is proportional to cos $\gamma$ which is approximately equal to $k$ cos $\varphi$. Rotor displacement x is simultaneously computed or measured.

The displacement x of the rotor and the estimation of cos $\gamma$ are used to compute, in a computation module 14 of the micro-processor, an estimation of the load as a function of the position of the rotor. This can be used to determine the mechanical play or "dead-zone" in a linkage or coupling system of an actuator, between the motor rotor and the mechanical organ to be actuated, as illustrated in the graph of figure 5a. When starting the motor, the actual relative position of the rotor within the dead zone 25 in figure 5a is unknown.

Referring to the figure 5b in addition to figures 4 and 5a, the motor is started and displaced from a starting position $x_0$ and is rotated a predefined distance $x_{t1}$ that is greater than the maximum mechanical play $(l_1 + l_2)$ of the

actuator relative to the motor rotor arising from manufacturing tolerances and specifications of the coupling system. Once the rotor has been displaced by $x_{t1}$, the rotor movement is reversed the rotor is displaced in the opposite direction an amount $x_{t2}$ which is greater than the amount $x_{t1}$ plus the maximum dead zone range specified for the actuation system. The distance $x_{t2}$ may therefore be approximately equal to 2 times $x_{t1}$. While moving the actuator in the aforesaid reverse direction, the external load torque i is continuously estimated using the method previously described. When there is a sudden change in the external load torque, the position value $x_1$ is stored and the displacement is continued until the rotor reaches $x_{t2}$. Rotor direction is then reversed towards $x_{t1}$ while continuously estimating the external load torque $\tau$ and when there is a sudden change in the value of the external load torque the position $x_2$ is stored and the rotor is displaced until once again the position $x_{t1}$ is reached. The rotor movement is then reversed until the rotor reaches the mid-point $x_f$ between the stored positions $x_1$ and $x_2$. A sudden change in the external load torque can be determined by applying a low pass filter to the signal $\tau$, and to create a new signal $\tau_{filt}$. A change is detected when the residuals of $\tau - \tau_{filt}$ is larger than a predetermined threshold level Th.

Positioning the rotor at the reference position $x_f$ mid-point of the dead zone ensures that the actuator organ coupled through the mechanical linkage system to the motor, is accurately positioned.

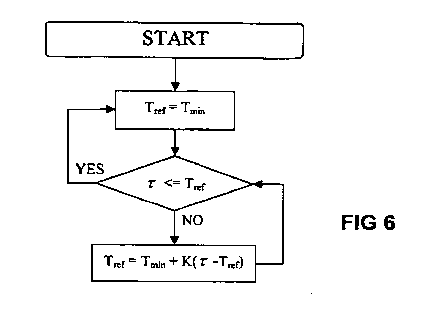

The control system and method according to the invention may also be used for external load torque compensation, whereby the motor control system increases the phase current if the load increases and thus guarantee that the motor does not loose any steps. This procedure is discussed herebelow with reference to figures see Fig. 4 and 6.

The procedure for control of the motor during normal operation, taking into account the varying external load, may advantageously also rely on the estimation of external load torque $\tau$ as previously described. The estimation of external load torque $\tau$ for determining the phase current i(t) supplied to the motor via the current controller 18 is particularly advantageous at low or very low speeds, particularly in view of the simplicity of the calculation required, leading to rapid and stable control of the motor.

As can be seen in figure 6, after having started the motor and, as a case may be having found the reference starting position taking into account any play as previously described, the external load torque $\tau$ is estimated with the same procedure as described above. The estimated value of external load torque $\tau$ is fed into a load compensator calculation module 24 that generates a reference value $T_{ref}$ that is input to the current reference generator 20 and into the positon generator 22. In the current reference generator 20 $T_{ref}$ is transformed into a current reference value $I_{ref}$ by using the motor specific relationship between torque and current and in the position generator 22 $T_{ref}$ is used to control the speed by limiting the speed, i.e. the increment of x, if $T_{ref}$. reaches a certain limit. The $I_{ref}$ signal from the current reference generator module 20 is fed into the current controller 18 and a PI or similar controller generates a voltage control signal u(t)

In response to an increasing external load, the phase current is increased such that the increase in power generates additional rotor torque that compensates for the increased external load torque. In the load torque compensation procedure, the value of the torque reference signal $T_{ref}$ is set at a predetermined application specific value $T_{min}$ stored in the system, and the external load torque estimation $\tau$ is compared with the torque reference value $T_{ref}$. If the external load is inferior to the reference value then the reference value remains unchanged, otherwise the reference value is increased to $T_{ref} = T_{min} + K(\tau - T_{ref})$, as shown in figure 6

The above-described load compensation procedure enables the motor to be controlled without position sensors very efficiently and in an economical and reliable manner, particularly at low speeds. The invention method is particularly advantageous in applications where the rotor is driven at low speed but requires a high responsiveness to changes in external load and/or requires a high degree of positional accuracy, such as found in many actuation systems.

Advantages of the invention are:

- ability to control low speed operation also for motors without variable inductance
- Reduced motor size
- Reduced acoustic noise
- Reduced power consumption
- Simple and fast calculations compared to other systems implementing sensorless control
- Increased reliability
- Reduced residual force due to minimum motor size
- Increased absolute mechanical precision (dead-zone compensation)
- Increased precision over entire life time (dead-zone compensation)

***References***

[1] S. Bolognani, M. Zigliotti, M. Zordan, Extended-Range PMSM Sensorless Speed Drive Based on Stochastic Filtering, IEEE Transactions on Power Electronics, Vol. 16, No. 1, January 2001

[2] T-H. Kim, B-K. Lee, M. Ehsani, Sensorless control of the BLDC motors from near-zero to high speeds, IEEE-Transactions-on-Power-Electronics. Nov. 2004, 19(6), p.1635-45

[3] DE 19751375 A1 (C. Obermeier)

[4] EP 1 693 952 (Toshiba KK)

[5] US 2003/030404 (Hitachi Ltd)

[6] US 2006/055362 (Hitachi Ltd)

[7] U. H. Rieder, M. Schroedl, Optimization of Saliency Effects of External Rotor Permanent Magnet Synchronous Motors with Respect to Enhanced INFORM Capability for Sensorless Control, 10th European Conference on Power Electronics and Applications, EPE 2003, Toulouse, France, Sept 2003

**Claims**

1. Method of controlling a PMSM, comprising measuring phase current i(t) of at least one phase of the PMSM, calculating a phase angle φ between the measured phase current i(t) and a phase voltage u(t) of said at least one phase, and estimating external load torque τ as a function of the cosine of the phase angle φ, wherein the estimated external load torque τ is compared to reference load torque $T_{ref}$, and based on the difference, the phase current i(t) is adjusted to compensate for an increase or decrease in external load torque.

2. Method according to claim 1 wherein the external load torque τ is estimated as a factor of the cosine of the phase angle φ.

3. Method according to claim 1 wherein the external load torque τ is estimated from the following function

$$\tau = k\frac{u^2 - e^2 - (Ri)^2}{2eRi}$$

where

$$e = \sqrt{u^2 + (Ri)^2 - 2uRi\cos\varphi} \quad ,$$

$i$ is the phase current,
$u$ is the phase voltage,
$R$ is the phase resistance, and
$k$ may be any chosen factor.

4. Method according to claim 1, 2, or 3 wherein the phase current and phase voltage are integrated.

5. Method according to claim 4 wherein the phase current and phase voltage are integrated over a specified time that is greater than or equal to a half period T of the phase current.

6. Method according to claim 5 wherein successive integrations are calculated in parallel, each new integration starting at a defined fraction of the period T after the previous integration.

7. Method according to any one of the preceding claims wherein at motor start-up, the motor rotor is displaced in at least one direction, the rotor displacement being calculated or measured and the external load torque $\tau$ being estimated during said displacement, whereby a mechanical limit position is defined at a position of the rotor where a rapid change of external load torque is observed.

8. Method according to claim 7 wherein the motor rotor is displaced in one direction and then in the opposite direction, the rotor displacement being calculated or measured and the external load torque $\tau$ being estimated during said displacement, whereby dead-zone limit positions are defined at positions of the rotor where a rapid change of external load torque is observed.

9. Method according to claim 8 wherein a reference position of the rotor from which rotor displacement is calculated or measured, is set at mid-point between the dead-zone limit positions.

10. An actuation system comprising a multi-phase permanent magnet synchronous motor, an electrical current sensor on at least one phase of the motor for measuring the time varying current of a stator coil of said phase, and a control system comprising a micro-processor connected to the current sensor, the micro-processor being configured to estimate a phase angle $\varphi$ between the measured phase current and phase voltage and therefrom estimate external load torque $\tau$ as a function of the cosine of the phase angle, wherein the micro-processor is configured to compare estimated external load torque $\tau$ to reference load torque $T_{ref}$, and based on the difference, to generate a current control signal for a power supply of the motor to compensate for an increase or decrease in external load torque.

11. The actuation system according to claim 10, wherein the micro-processor is configured to estimate external load torque $\tau$ as a factor of the cosine of the phase angle $\varphi$.

12. The actuation system according to claim 10, wherein the micro-processor is configured to estimate external load torque $\tau$ according to the following function

$$\tau = k\,\frac{u^2 - e^2 - (Ri)^2}{2eRi}$$

where

$$e = \sqrt{u^2 + (Ri)^2 - 2uRi\cos\varphi}\quad,$$

i is the phase current,
u is the phase voltage,
R is the phase resistance, and
k may be any chosen factor.

13. The actuation system according to claim 10, 11 or 12, wherein the micro-processor is configured to integrate phase current and phase voltage.

14. The actuation system according to claim 13, wherein the micro-processor is configured to integrate phase current and phase voltage over a specified time that is greater than or equal to a half period of the phase current.

15. The actuation system according to any one of claims 10-14, wherein the micro-processor is configured, at motor start-up, to generate a control signal that displaces a rotor of the motor in at least one direction, the rotor displacement being calculated or measured and the external load torque $\tau$ being estimated during said displacement, and to define a mechanical limit position of the rotor where a rapid change of external load torque is observed.

16. The actuation system according to claim 15 wherein the motor rotor is displaced in one direction and then in an opposite direction, the rotor displacement being calculated or measured and the external load torque $\tau$ being estimated during said displacement, whereby dead-zone limit positions are defined at positions of the rotor where a rapid change of external load torque is observed.

17. The actuation system according to claim 16, wherein the micro-processor is configured to define a reference position of the rotor from which rotor displacement is calculated or measured, at mid-point between the dead-zone limit positions.

**Patentansprüche**

1. Verfahren zur Steuerung eines PMSMs, umfassend Messen eines Phasenstroms i(t) von mindestens einer Phase des PMSMs, Berechnen eines Phasenwinkels zwischen dem gemessenen Phasenstrom i(t) und einer Phasenspannung u(t) der mindestens einen Phase und Schätzen eines externen Lastmoments $\tau$ als eine Funktion des Cosinus des Phasenwinkels $\varphi$, wobei das geschätzte externe Lastmoment $\tau$ mit einem Referenzlastmoment $T_{ref}$ verglichen wird und der Phasenstrom i(t) basierend auf der Differenz eingestellt wird, um eine Zu- oder Abnahme des externen Lastmoments auszugleichen.

2. Verfahren nach Anspruch 1, wobei das externe Lastmoment $\tau$ als ein Faktor des Cosinus des Phasenwinkels $\varphi$ geschätzt wird.

3. Verfahren nach Anspruch 1, wobei das externe Lastmoment $\tau$ aus der folgenden Funktion geschätzt wird:

$$\tau = k \frac{u^2 - e^2 - (Ri)^2}{2eRi}$$

wobei

$$e = \sqrt{u^2 + (Ri)^2 - 2uRi \cos \varphi} \, ,$$

i der Phasenstrom ist,
u der Phasenspannung ist,
R der Phasenwiderstand ist, und
k ein beliebiger gewählter Faktor sein kann.

4. Verfahren nach Anspruch 1, 2 oder 3, wobei der Phasenstrom und die Phasenspannung integriert werden.

5. Verfahren nach Anspruch 4, wobei der Phasenstrom und die Phasenspannung über eine spezifizierte Zeit, die größer oder gleich einer halben Periode T des Phasenstroms ist, integriert werden.

6. Verfahren nach Anspruch 5, wobei aufeinander folgende Integrationen parallel berechnet werden, und jede neue Integration an einer definierten Fraktion der Periode T nach der vorherigen Integration beginnt.

7. Verfahren nach einem der vorhergehenden Ansprüche, wobei bei Motorstart der Motorrotor in mindestens einer Richtung verschoben wird, die Rotorverschiebung berechnet oder gemessen wird und das externe Lastmoment $\tau$ während der Verschiebung geschätzt wird, wobei eine mechanische Grenzstellung an einer Position des Rotors definiert wird, an der eine schnelle Änderung des externen Lastmoments beobachtet wird.

8. Verfahren nach Anspruch 7, wobei der Motorrotor in einer Richtung und dann in der entgegengesetzten Richtung verschoben wird, die Rotorverschiebung berechnet oder gemessen wird und das externe Lastmoment $\tau$ während der Verschiebung geschätzt wird, wobei Totbereichsgrenzstellungen an Positionen des Rotors definiert werden, an welchen eine schnelle Änderung des externen Lastmoments beobachtet wird.

9. Verfahren nach Anspruch 8, wobei eine Referenzstellung des Rotors, von welcher die Rotorverschiebung berechnet oder gemessen wird, am Mittelpunkt zwischen den Totbereichsgrenzstellungen festgelegt wird.

10. Betätigungssystem, umfassend einen Mehrphasen-Synchronmotor mit Dauermagnet, einen elektrischen Stromsensor auf mindestens einer Phase des Motors zum Messen des zeitlich veränderlichen Stroms einer Statorspule der Phase und ein Steuersystem, das einen Mikroprozessor umfasst, der mit dem Stromsensor verbunden ist, wobei der Mikroprozessor so konfiguriert ist, dass er einen Phasenwinkel $\varphi$ zwischen dem gemessenen Phasenstrom und der Phasenspannung schätzt und daraus ein externes Lastmoment $\tau$ als eine Funktion des Cosinus des Phasenwinkels schätzt, wobei der Mikroprozessor so konfiguriert ist, dass er das geschätzte externe Lastmoment $\tau$ mit einem Referenzlastmoment $T_{ref}$, vergleicht und basierend auf der Differenz ein Stromsteuersignal für eine Stromquelle des Motors erzeugt, um eine Zu- oder Abnahme des externen Lastmoments auszugleichen.

11. Betätigungssystem nach Anspruch 10, wobei der Mikroprozessor so konfiguriert ist, dass er das externe Lastmoment $\tau$ als einen Faktor des Cosinus des Phasenwinkels $\varphi$ schätzt.

12. Betätigungssystem nach Anspruch 10, wobei der Mikroprozessor so konfiguriert ist, dass er das externe Lastmoment $\tau$ gemäß der folgenden Funktion schätzt:

$$\tau = k\frac{u^2 - e^2 - (Ri)^2}{2eRi}$$

wobei

$$e = \sqrt{u^2 + (Ri)^2 - 2uRi\cos\varphi} \quad,$$

$i$ der Phasenstrom ist,
$u$ der Phasenspannung ist,
$R$ der Phasenwiderstand ist, und
$k$ ein beliebiger gewählter Faktor sein kann.

13. Betätigungssystem nach Anspruch 10, 11 oder 12, wobei der Mikroprozessor so konfiguriert ist, dass er Phasenstrom und Phasenspannung integriert.

14. Betätigungssystem nach Anspruch 13, wobei der Mikroprozessor so konfiguriert ist, dass er Phasenstrom und Phasenspannung über eine spezifizierte Zeit, die größer oder gleich einer halben Periode des Phasenstroms ist, integriert.

15. Betätigungssystem nach einem der Ansprüche 10 bis 14, wobei der Mikroprozessor so konfiguriert ist, dass er bei Motorstart ein Steuersignal erzeugt, das einen Rotor des Motors in mindestens einer Richtung verschiebt, wobei die Rotorverschiebung berechnet oder gemessen wird und das externe Lastmoment $\tau$ während der Verschiebung geschätzt wird, und eine mechanische Grenzstellung an einer Position des Rotors definiert, an der eine schnelle Änderung des externen Lastmoments beobachtet wird.

16. Betätigungssystem nach Anspruch 15, wobei der Motorrotor in einer Richtung und dann in einer entgegengesetzten Richtung verschoben wird, die Rotorverschiebung berechnet oder gemessen wird und das externe Lastmoment $\tau$ während der Verschiebung geschätzt wird, wobei Totbereichsgrenzstellungen an Positionen des Rotors definiert werden, an welchen eine schnelle Änderung des externen Lastmoments beobachtet wird.

17. Betätigungssystem nach Anspruch 16, wobei der Mikroprozessor so konfiguriert ist, dass er eine Referenzstellung des Rotors, von welcher die Rotorverschiebung berechnet oder gemessen wird, am Mittelpunkt zwischen den Totbereichsgrenzstellungen definiert.

**Revendications**

1. Procédé de commande d'un PMSM, comprenant la mesure d'un courant de phase i(t) d'au moins une phase du PMSM, le calcul d'un angle de phase $\varphi$ entre le courant de phase i(t) mesuré et une tension de phase u(t) de ladite au moins une phase, et l'estimation d'un couple de charge externe $\tau$ en fonction du cosinus de l'angle de phase $\varphi$, dans lequel le couple de charge externe $\tau$ estimé est comparé à un couple de charge de référence $T_{ref}$ et, sur la base de la différence, le courant de phase i(t) est ajusté pour compenser une augmentation ou une diminution du couple de charge externe.

2. Procédé selon la revendication 1, dans lequel le couple de charge externe $\tau$ est estimé en tant que facteur du cosinus de l'angle de phase $\varphi$.

3. Procédé selon la revendication 1, dans lequel le couple de charge externe $\tau$ est estimé à partir de la fonction suivante :

$$\tau = k \frac{u^2 - e^2 - (Ri)^2}{2eRi}$$

où

$$e = \sqrt{u^2 + (Ri)^2 - 2uRi \cos\varphi}$$

i est le courant de phase,
u est la tension de phase,
R est la résistance de phase, et
k peut être n'importe quel facteur choisi.

4. Procédé selon la revendication 1, 2, ou 3, dans lequel le courant de phase et la tension de phase sont intégrés.

5. Procédé selon la revendication 4, dans lequel le courant de phase et la tension de phase sont intégrés pendant un temps spécifié qui est supérieur ou égal à une demi-période T du courant de phase.

6. Procédé selon la revendication 5, dans lequel des intégrations successives sont calculées en parallèle, chaque nouvelle intégration commençant à une fraction définie de la période T après l'intégration précédente.

7. Procédé selon l'une quelconque des revendications précédentes, dans lequel, au démarrage du moteur, le rotor du moteur est déplacé dans au moins une direction, le déplacement du rotor étant calculé ou mesuré et le couple de charge externe $\tau$ étant estimé pendant ledit déplacement, moyennant quoi une position de limite mécanique est définie à une position du rotor où une variation rapide du couple de charge externe est observée.

8. Procédé selon la revendication 7, dans lequel le rotor du moteur est déplacé dans une direction et ensuite dans la direction opposée, le déplacement du rotor étant calculé ou mesuré et le couple de charge externe $\tau$ étant estimé pendant ledit déplacement, moyennant quoi des positions de limite de zone morte sont définies à des positions du rotor où une variation rapide du couple de charge externe est observée.

9. Procédé selon la revendication 8, dans lequel une position de référence du rotor à partir de laquelle un déplacement du rotor est calculé ou mesuré, est fixée à un point milieu entre les positions de limite de zone morte.

10. Système d'actionnement comprenant un moteur synchrone à aimant permanent polyphasé, un capteur de courant électrique sur au moins une phase du moteur pour mesurer le courant variable dans le temps d'une bobine de stator de ladite phase, et un système de commande comprenant un microprocesseur connecté au détecteur de courant, le microprocesseur étant configuré pour estimer un angle de phase $\varphi$ entre le courant de phase mesuré et la tension de phase et, à partir de celui-ci, estimer un couple de charge externe $\tau$ en fonction du cosinus de l'angle de phase, dans lequel le microprocesseur est configuré pour comparer le couple de charge externe $\tau$ estimé avec le couple de charge de référence $T_{ref}$, et sur la base de la différence, pour générer un signal de commande de courant pour l'alimentation du moteur pour compenser une augmentation ou une diminution du couple de charge externe.

11. Système d'actionnement selon la revendication 10, dans lequel le microprocesseur est configuré pour estimer le couple de charge externe $\tau$ en tant que facteur du cosinus de l'angle de phase $\varphi$.

**12.** Système d'actionnement selon la revendication 10, dans lequel le microprocesseur est configuré pour estimer le couple de charge externe τ conformément à la fonction suivante :

$$\tau = k \frac{u^2 - e^2 - (Ri)^2}{2eRi}$$

où

$$e = \sqrt{u^2 + (Ri)^2 - 2uRi \cos \varphi}$$

i est le courant de phase,
u est la tension de phase,
R est la résistance de phase, et
k peut être n'importe quel facteur choisi.

**13.** Système d'actionnement selon la revendication 10, 11 ou 12, dans lequel le microprocesseur est configuré pour intégrer le courant de phase et la tension de phase.

**14.** Système d'actionnement selon la revendication 13, dans lequel le microprocesseur est configuré pour intégrer le courant de phase et la tension de phase pendant un temps spécifié qui est supérieur ou égal à une demi-période du courant de phase.

**15.** Système d'actionnement selon l'une quelconque des revendications 10 à 14, dans lequel le microprocesseur est configuré, au démarrage du moteur, pour générer un signal de commande qui déplace un rotor du moteur dans au moins une direction, le déplacement du rotor étant calculé ou mesuré et le couple de charge externe τ étant estimé pendant ledit déplacement, et pour définir une position de limite mécanique du rotor où une variation rapide du couple de charge externe est observée.

**16.** Système d'actionnement selon la revendication 15, dans lequel le rotor du moteur est déplacé dans une direction et ensuite dans une direction opposée, le déplacement du rotor étant calculé ou mesuré et le couple de charge externe τ étant estimé pendant ledit déplacement, moyennant quoi des positions de limite de zone morte sont définies à des positions du rotor où une variation rapide du couple de charge externe est observée.

**17.** Système d'actionnement selon la revendication 16, dans lequel le microprocesseur est configuré pour définir une position de référence du rotor à partir de laquelle un déplacement du rotor est calculé ou mesuré à un point milieu entre les positions de limite de zone morte.

FIG 1a
(cos γ ≈ 0)

FIG 1b
(cos γ ≈ 0.3)

FIG 1c
(cos γ ≈ 0.8)

**FIG 2a**

$$u \qquad e$$
$$\varphi \qquad \gamma \qquad L \cdot \frac{di}{dt}$$
$$i \qquad R \cdot i$$

**FIG 2b**

$$u \qquad e$$
$$\varphi \qquad \gamma$$
$$i \qquad R \cdot i$$

**FIG 3**

μC — 9    2

Normal Operation ┊ Startup Procedure

| Current controller | $u(t)$ → | PWM (Power converter) — 6 |

18

| External load torque compensation | Dead-Zone detection & reference point identification — 14 | PMSM motor — 4 |

24

12 — Estimation of $\tau$ ← $i(t)$ | $i(t)$ ↓ | Current measure (A/D) — 10 |

**FIG 4**

START

$x = x_{t1}$ — NO → Move actuator to $x_{t1}$

YES

Start actuator movement towards $x_{t2}$, while continuously estimating $\tau$

Is there a sudden change in $\tau$ — NO

YES

Save $x_1$, wait until $x = x_{t2}$

Start actuator movement towards $x_{t1}$, while continuously estimating $\tau$

Is there a sudden change in $\tau$ — NO

YES

Save $x_2$, wait until $x = x_{t1}$

Move actuator to desired position $x_f = x_1 + l_1$ where $l_1 = (x_2 - x_1)/2$

**FIG 5b**

END

```
                    ┌─────────────────────────────┐
                    │           START             │
                    └─────────────────────────────┘
                                  │
                                  ▼
              ┌──────────►┌───────────────────┐
              │           │  T_ref = T_min    │
              │           └───────────────────┘
              │                   │
              │                   ▼
        YES   │              ╱─────────╲
    ◄─────────┤            ╱   τ <= T_ref  ╲◄────────┐
              │            ╲             ╱           │
              │              ╲─────────╱             │
              │                   │  NO               │
              │                   ▼                   │
              │      ┌─────────────────────────────┐ │
              │      │ T_ref = T_min + K(τ - T_ref) ├─┘
              │      └─────────────────────────────┘
```

$$T_{ref} = T_{min}$$

$$\tau \leq T_{ref}$$

$$T_{ref} = T_{min} + K(\tau - T_{ref})$$

**FIG 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19751375 A1
- EP 1693952 A
- US 2003030404 A
- US 2006055362 A


**Non-patent literature cited in the description**

- **S. BOLOGNANI ; M. ZIGLIOTTI ; M. ZORDAN.** Extended-Range PMSM Sensorless Speed Drive Based on Stochastic Filtering. *IEEE Transactions on Power Electronics,* January 2001, vol. 16 (1
- **T-H. KIM ; B-K. LEE ; M. EHSANI.** Sensorless control of the BLDC motors from near-zero to high speeds. *IEEE-Transactions-on-Power-Electronics,* November 2004, vol. 19 (6), 1635-45
- **U. H. RIEDER ; M. SCHROEDL.** Optimization of Saliency Effects of External Rotor Permanent Magnet Synchronous Motors with Respect to Enhanced INFORM Capability for Sensorless Control. *10th European Conference on Power Electronics and Applications,* September 2003